Europäisches Patentamt

European Patent Office

Office européen des brevets

(11) Publication number: **0 437 906 A1**

## EUROPEAN PATENT APPLICATION

(21) Application number: 90300497.6

(22) Date of filing: 17.01.90

(51) Int. Cl.⁵: **B01L 3/02**, G01N 35/06

(43) Date of publication of application:
24.07.91 Bulletin 91/30

(84) Designated Contracting States:
DE FR GB IT

(71) Applicant: Atake, Minoru
579-6, Ohoiso Ohoiso-machi
Naka-gun Kanagawa-ken(JP)

(72) Inventor: Atake, Minoru
579-6, Ohoiso Ohoiso-machi
Naka-gun Kanagawa-ken(JP)

(74) Representative: Godwin, Edgar James et al
MARKS & CLERK 57-60 Lincoln's Inn Fields
London, WC2A 3LS(GB)

(54) System for measuring liquid.

(57) The system comprises means for applying suction to liquid to be measured, means for maintaining liquid in a micro-pipette tube (33) having a storage portion with a large inner diameter and a slender portion, and a pressure gauge for measuring potential head in the tube (33). The maintaining means includes a connector (28) having stepped joint portions (28a,28b) with outer diameters corresponding to different inner diameters of different micro-pipette tubes (33,33').

FIG.5.

## SYSTEM FOR MEASURING LIQUID

The present invention relates to a system for measuring liquid and more particularly to a system for detecting whether or not a micro-pipette tube or tubes be in accord with a prescribed value by measuring a liquid height in the micro-pipette tube or tubes when air suection is applied to the micro-pipette tube or tubes.

When test liquid material, e.g. serum, is divided into a plurality of test tubes for intensive investigation, it is necessary to monitor whether or not the test material is divided into unfirom, regulated volumes.

Generally, the volume of the test material has been detected directly by scale of the pressure gauge, which is in proportion to a hydraulic head, when the air suction is applied to the micro-pipette tube or tubes. Accordingly, the prior art system is incapable of analysis precision below 1 millimeter readable to a liquid height or level in the micro-pipette tube or tubes. Such a reading is within the measuring error of the pressure gauge and is unreliable.

The present inventor has previously proposed an improved system for measuring liquid with a higher precision in which a pressure gauge directly indicates a hydraulic head in proportion to a liquid level or height in a micro-pipette tube or tubes, as described in U.S. Patent specification No. 4,780,833. One problem was found when the improved system was realized in practice, viz. how to make it possible for different micro-pipette tube or tubes to be selected and exchanged with ease with their volumes corresponding to the volume of the test material to be divided in the procedure of operation of the system, for maintaining the higher precision.

The present invention provides a measuring system including a special connector or connectors capable of being adapted to different micro-pipette tube selected according to the volume of the test material without the exchange of said connector or connectors.

In particular the invention provides a system for measuring liquid comprising means for applying suction to liquid to be measured, means for maintaining liquid in a micro-pipette tube or tubes, said tube having a storage portion with a large inner diameter and a slender tubular portion with small diameter, said maintaining means including one or more connectors each having stepped joint portions with outer diameters corresponding to different inner diameters of said micro-pipette tubes, and a pressure gauge for measuring potential head in said micro-pipette tube or tubes.

Optional and preferred features or embodiments of the invention are set forth in claim 2 et seq.

The invention will be described further, by way of example, with reference to the accompanying drawings, in which:

Fig. 1 is a plan view of a liquid measuring system according to one embodiment of this invention;

Fig. 2 is a front view of the system;

Fig. 3 is a side view of the system;

Fig. 4 is an enlarged portion partially illustrated in a front view of the system;

Fig. 5 is a side view of the enlarged portion of Fig. 4;

Fig. 6 is a plan view of the enlarged portion of Fig. 4;

Fig. 7 is a flow chart of the system for explanation; and

Fig. 8 is a side view of an enlarged essential portion of a system modified from the embodiment mentioned above.

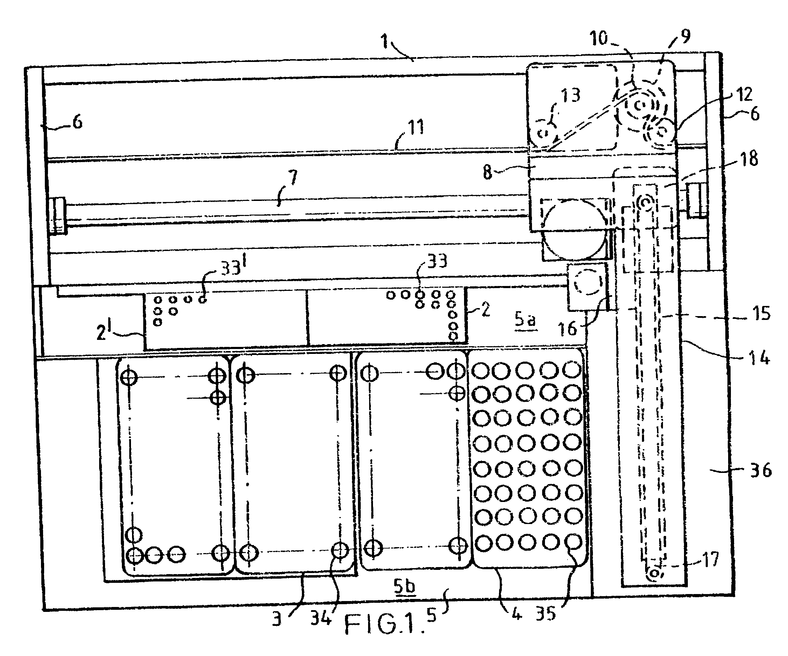

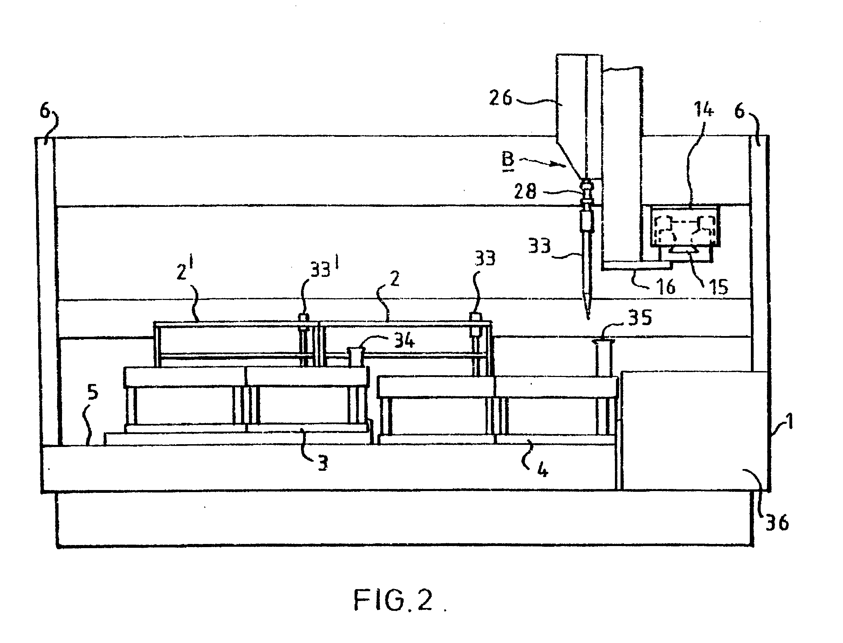

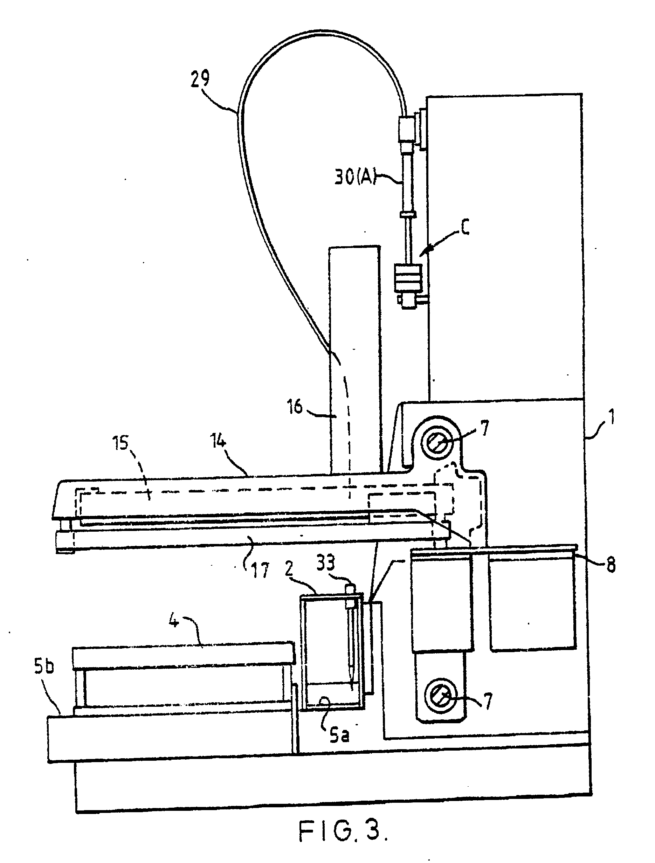

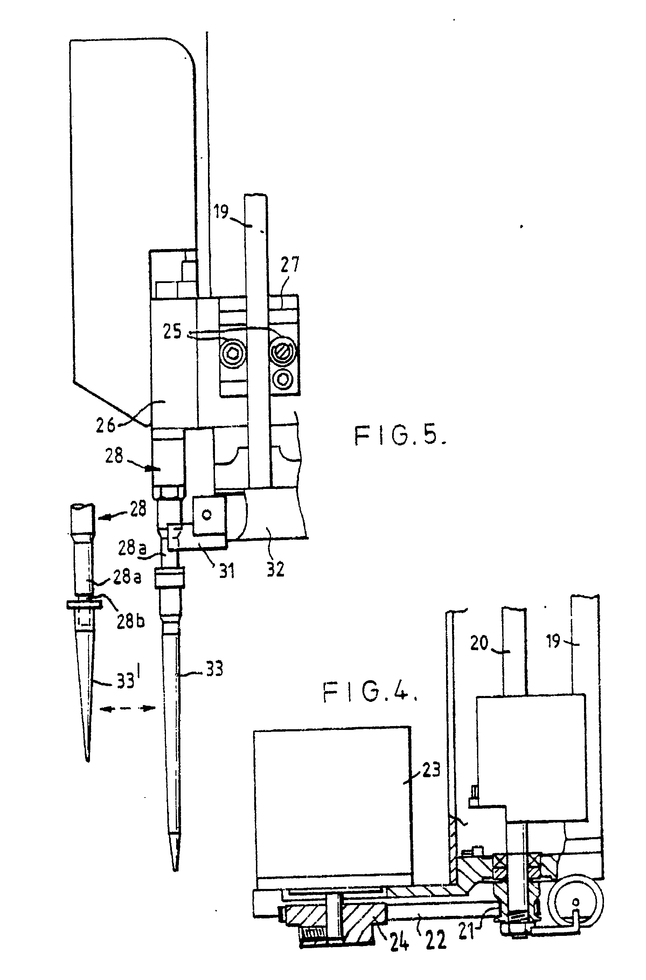

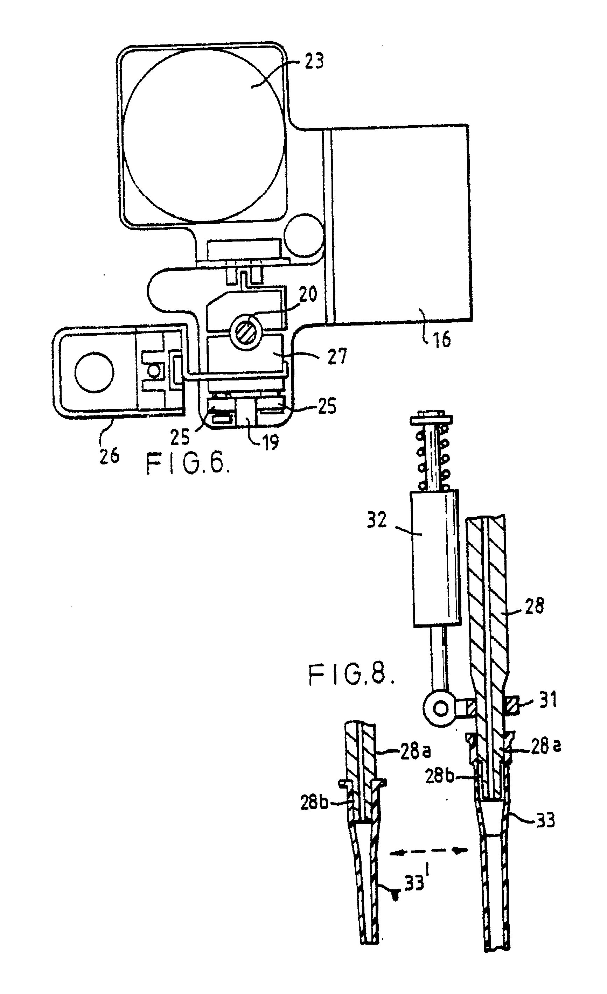

As shown in Figs. 1 to 6, a system for measuring liquid level includes means A for applying suction to the liquid to be measured, means B for maintaining the liquid in a pipette tube 33 or 33', and a pressure gauge C for measuring a potential hydraulic head in the pipette tube 33 or 33'.

In the embodiment, the means A is a piston-cylinder assembly 30 and the means B includes a connector 28 having two stepped portions 28a and 28b which have different outer diameters corresponding to inner diameters of different micro-pipette tubes 33 and 33'. Said piston-cylinder assembly 30 has a hollow cylinder and a piston slidably inserted into said cylinder and operated by means of actuator (not shown) according to said measuring system.

Said measuring system further comprises a device for transferring said connector 28 in three directions so called as X direction, Y direction, and Z direction which are perpendicular to each other by a right angle. Said device comprises a body 1 having a stage 5 separated to two portions 5a and 5b, said portion 5a being adapted to support chip racks 2 and 2' for containing said micro-pipette tubes 33 and 33' respectively which are parallel arranged on a plane in X and Z directions, and said portion 5b being adapted to support sample racks 3 and 3' for containing test tubes 34 and 35 respectively which are parallel arranged on a plane in X and Z directions. Said test tubes 35 contain test material to be divided and said test tubes 34 are adapted to receive divided sample material.

Said body 1 has plate-formed frames 6 and 6 at its both sides to which guide beams 7 and 7 are bridged so as to extend to X direction. The said guide beams 7 and 7 slidably support a carrier 8 which is transferred thereon by means of a motor 9 which is controlled in advance and reverse rotations. Namely, a gear 10 is attached to the output shaft of said motor 9 and intermeshed with an endless timing belt 11 having teeth. Said carrier includes guide wheels 12 and 13 adapted to stretch said timing belt 11 by tension stress, and a beam 14 extended to Z direction along which a guide rail 15 is disposed. A head 16 is capable of being transferred to said rail 15, and attached to an endless transmission belt 17 turned between front and rear portions of said beam 14, thereby to carry said head 16 along said rail 15 when said belt 17 is driven by means of a motor 18 which is controlled in advance and reverse rotations. Said head 16 has a guide column 19 and a screw shaft 20 rotatably supported thereto in a manner to be parallel aligned to said guide column 19. Said screw shaft has a teeth pulley 21 attached to the lower end thereof and intermeshed to a timing belt 22, and a motor 23 carried on said head 16 causes the timing belt 22 to be driven so as to transmit the power through said teeth pulley 21 to said screw shaft due to the rotation thereof. A sub-head 26 is carried on said head 16 in a manner to grasp said column 19 by means of rollers 25 and has a female screw block 27 threaded to said screw shaft 20, whereby said sub-head 26 is vertically shifted by advance and reverse rotations of said motor 23.

Said sub-head 26 is adapted to carry the above-mentioned connector 28 which is communicated to the piston-cylinder assembly 30 through a flexible tube 29, and a remover 31 is disposed said head 16 in a manner to be protruded across the connector 28 and to be vertically moved by means of solenoid actuator 32.

Said chip racks 2 and 2' mentioned above are provided with pluralities of holes with different diameters corresponding to said disposable micro-pipette tubes 33 and 33' in this embodiment, and said test tube racks 3 and 4 are also provided with pluralities of holes for supporting test tubes as shown in Fig. 1.

A control system including a micro-computor system is disposed in an area 36 defined to said device and adapted to control said motor 9, 18, 23, said piston-cylinder assembly 30 and said solenoid actuator 32.

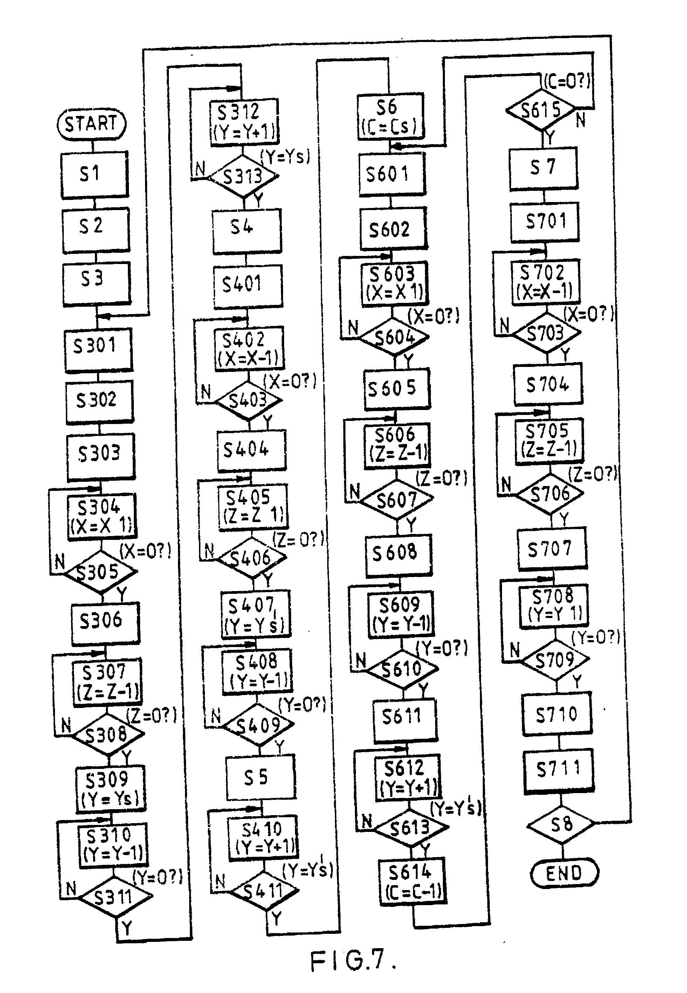

Fig. 7 indicates control steps of said system for measuring liquid and dividing into test tubes as a flow chart. Namely, numerical values are firstly defined to the memories of said computor for static positions of chip racks 2 and 2' and test tube racks 3 and 4 on said stages 5a and 5b, and hole pitches of said racks in x and z directions ( pitches between the centers of disposable micro-pipette tubes and test tubes arranged to said corresponding racks ).

In this embodiment, said numerical values may be defined by means of hand operating device included in said control system. Namely, said hand operating device ( not shown ) is adapted to transfer said connector 28 in X, Y and Z directions in such manner that the connector 28 is access to said holes of said chip racks 2 and 2' to define pitches, one of the micro-pipette tubes 33 or 33' is selected and attached to said connector 28, and said micro-pipette tube with said connecter 28 is inserted into empty test tubes 34 and 35 on trial so as to define pitches and inserting levels, thereby to set the monitor values in the memories of said system. It is indicated as a first step S1. Next, pick-up order of said micro-pipette tubes 33 and 33', select order of said test tubes 35, and dividing numbers, dividing volumes, and dividing order of said test tubes 34 are defined ( step S2 ). Thereafter, said control system is switched to auto-operating device (not shown ). It is indicated as a third step (step S3) in Fig. 7. Accordingly, the control system selects either one of said micro-pipette tubes 33 and 33' according to the data memorized, and defines the pick-up position on said chip rack corresponding to said selected micro-pipette tube ( step S301 ). The control system 36 operates to define the driving distances of said sub-head 26 necessary to reach to a next prescribed position by means of said motors 9, 18 and 23 in accordance to three directions X, Y and Z ( step S302 ).

Firstly, a drive distance in X direction is defined for digit ( step S303 ), a digit is subtracted for one with one pulse signal is applied to said motor 9 and its operation is repeated as said digit is identified to zero ( steps S304 and S305 ). In this case, said motor 9 is advancedly or reversedly rotated according to the plus or minus dimension of said drive distance. Next, a drive distance in Z direction is defined for digit ( step S306 ), a digit is subtracted for one with one pulse signal is also applied to said motor 18 and its operation is repeated as said digit is identified to zero ( steps S307 and S308 ). During their steps, said carrier 8 is moved along said beams7 and 7 by said motor 9 being driven, and said head 16 is moved along said rail 15 by said motor 18 being driven, thereby to position said connector 28 above said selected micro-pipette tube in said chip rack 2 or 2'. And a drive distance in Y direction is defined for digit ( step S309 ). In this case, said drive distance is different for selecting either one of said micro-pipette tubes 33 and 33', because the connecting portion 28a of said connector 28 is fitted to a large diameter pipette tube 33 and the connecting portion 28b is fitted to a small diameter pipette tube 33' and their portions 28a and 28b are stepped in a vertical direction. A digit is subtracted for one with one pulse signal is applied to said motor 23 and its operation is repeated as said digit is identified to zero ( steps S310 and S311 ), thereby to cause the selected micro-pipette to be detachably and frictionally fitted to the connecting portion of said connector 28. In this case, said screw shaft 20 is rotated by the motor 23 being moved and then said sub-head 26 is lowered. A digit is added for one with one pulse signal is applied to said motor 23 in a reverse side and repeated as said digit is identified to the original value so that the sub-head 26 is raised by the motor 23 being moved in a reverse direction.

Thereafter, said control system operates to define the driving distances of said sub-head 26 necessary to reach to a next prescribed position, i.e., a position of said selected test tube 35 containing liquid to be divided in accordance to X, Y and Z directions ( step S4 ). Firstly, a driving distance in X direction is defined for digit ( step S401 ), a digit is subtracted for one with one pulse signal being applied to said motor 9 and repeated as said digit is identified to zero ( steps S402 and S403 ). Next, a driving distance in Z direction is defined for digit ( step S404 ), and then a digit is subtracted for one with one pulse signal being applied to said motor 18 and repeated as said digit is settled to zero ( steps S405 and S406 ). During their operations, said carrier 8, said head 16 are carried so as to position said connector 28 with said selected micro-pipette tube above said selected test tube 35. And as a distance in Y direction is defined for digit ( step S407 ), with subtracting for one, said motor 23 obtain its pulse so as to be driven ( steps S408 and S409 ), thereby to cause the lower end of said micro-pipette tube hold to said connecter 28 to be inserted into the liquid in said selected test tube 35. Then said control system commands suck operation to said piston-cylinder assembly 30 with its prescribed volume ( step S5 ), thereby to cause its liquid to be sucked to said micro-pipette tube.

After suck operation, said digit is added toward said original value so that said motor 23 is driven for returning said micro-pipette tube with said connector 28 upwards ( steps S410 and S411 ).

Said control system defines a number of division of said liquid ( for instance, either one of 1 to 5 ) and a volume to be divided ( for instance, 20 micron milimeter to 200 micron milimeter )( step S6 ). Firstly, digital values of driving distances toward the next prescribed position defined in X, Y and Z directions is determined in a similar order of that mentioned in the steps S302 or S4 ( step S601 ), thereby to cause said motors 9,18 and 23 to be driven with said control system being counted for digital subtract and addition like to the steps S303 to S308 or S401 to S406 ( step S602 to S607 ). In this case, said carrier 8, said head 16 have access to said prescribed position, i.e., above a selected test tube 34 on said test tube rack 3. After vertical operation of said sub-head 26 in Y direction, said micro-pipette tube is inserted into said selected test tube 34. A command signal from said control system is applied to said piston-cylinder assembly 30 so that a prescribed volume of liquid sucked in said micro-pipette tube is exhausted to said test tube 34 with said piston-cylinder assembly 30 acting for a stroke. Thereby, one time of liquid division is finished. And then said digital count up is repeated in reverse so that the motor 23 is rotated to cause the subhead 26 to be shifted upwards ( steps S608 to S613 ), thereby to cause the micro-pipette tube to be picked up from said test tube 34.

Said number of division is subtracted for one ( step S614 ), and if it is identified to zero ( step S615) said control operation is directed to step S7 and if not zero the operation is returned to step S601 and defines a position of the next new test tube 34, for example, neighbour test tube 34 to that mentioned above.

As said control operation is reached to said step S7, said control system defines return distances to the same position of said micro-pipette tube already used in X, Y and Z directions for driving said motors 9, 18 and 23. Said carrier 8 is transferred to X direction ( the driving distance is defined at step S701, the subtract and comparison are accomplished and said motor 9 is driven at steps S702 and S703 ). Next, said head 16 is transferred to Z direction ( the distance is defined at step S704, the subtract and comparison are accomplished and said motor 18 is driven at steps S705 and S706 ).

Then, said sub-head 26 is transferred to Y direction ( the vertical distance is defined at step S707, the subtract and comparison are accomplished and said motor 23 is driven at steps S708 and S709 ). For step S710, said control system commands said solenoid actuator 32 to cause said remover 31 to be advanced to said connector 28 in a horizontal direction and for step S711, sub-head 26 is shifted up so as to slip off said micro-pipette tube from the connecting portion of said connector 28 and reset it to the original hole of said chip rack.

Finally, after one cycle of liquid division is finished as mentioned above, said control system selects whether or not the automatic operation proceeds and if its procedure is selected, either one of said micro-pipette tubes 33 and 33' is determined ( step S8 ).

In this embodiment, said remover 31 is disposed on said head 16. However, said remover 31 may be disposed on said sub-head 26 as shown in Fig. 8. In this modification, said remover 31 is a hollow cylinder surrounding said connector 28 and vertically moved by means of solenoid actuator 32 disposed to said sub-head 26 in a manner to push down the micro-pipette for removing it from the connecting portion of said connecter 28.

Furthermore, in the embodiments, said micro-pipette tube has, of course, a storage portion with a large inner diameter and a slender tubular portion with a small diameter similarly to that of the description disclosed in U.S. Patent specification No. 4,780,833, and a plurality of connectors may be provided to said head or sub-head, though one connecter 28 is provided alone in the embodiments mentioned above.

**Claims**

1. A system for measuring liquid using micro-pipette tubes, the system comprising one or more connectors (28) for connection to one or more micro-pipette tubes, means (30) for applying suction to the connector(s) (28), and a pressure gauge (C) for measuring potential head in the micro-pipette tube(s), characterised in that the or each connector (28) has stepped joint portions (28a,28b) of different outer diameters for insertion in micro-pipette tubes (33,33') of different sizes.

2. A system as claimed in claim 1, having a control system including means for setting numerical data in memories of the control system thereby to cause the appropriate joint portion (28a or 28b) to be selectively fitted to the corresponding micro-pipette tube (33 or 33') in an automatic control operation.

3. A system as claimed in claim 2, in which the control system includes means for transferring the connector (28) in three mutually perpendicular directions, the transferring means being operated by control demand of the control system.

4. A system as claimed in claim 3, in which the transferring means includes a head (16) capable of being carried in two horizontal directions perpendicular to each other and a sub-head (26) capable of being carried in a vertical direction and supported by the head (16).

5. A system as claimed in claim 4, in which the head (16) carries removing means (31,32) for slipping a used micro-pipette tube off the connector (28).

6. A system as claimed in claim 5, in which the removing means includes a remover (31, Fig. 5) capable of being protruded in a horizontal direction in a manner to be moved across the connector(28).

7. A system as claimed in claim 4, in which the sub-head (26) carries removing means (31,32, Fig. 8) for slipping a used micro-pipette tube off the connector (28).

8. A system as claimed in claim 5 to 7, in which the removing means includes a solenoid actuator (32) for vertically pushing the used micro-pipette tube off the connector.

FIG.1.

FIG.2 .

EP 0 437 906 A1

FIG. 3.

FIG.5.

FIG.4.

FIG.6.

FIG.8.

EP 0 437 906 A1

FIG.7.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| Y,D | EP-A-0 215 534  (M. ATAKE) <br> * Figures 1,5; column 4, lines 6-22; claim 1 * | 1 | B 01 L    3/02 <br> G 01 N   35/06 |
| Y | EP-A-0 199 452  (EASTMAN KODAK CO.) <br> * Page 2, lines 5-9,18-22; page 3, lines 17-24; page 4, line 20 - page 5, line 3; page 7, lines 13-20; figures 2,6 * | 1 | |
| A | US-A-3 621 208  (T.L. FISHER) <br> * Column 1, lines 35-42,53-55; figures 1,3 * | 1 | |
| A | WO-A-8 805 541  (B. LIMONT) <br> * Page 1, line 33 - page 2, line 5; page 3, lines 23-32; page 4, line 10 - page 5, line 5; figures 1-15 * | 3,5 | |
| A | EP-A-0 138 205  (CETUS CORP.) <br> * Abstract; figures 1,4; page 4, line 22 - page 5, line 10 * | 5,6,8 | TECHNICAL FIELDS SEARCHED (Int. Cl.5) |
| A | US-A-4 527 437  (J.R. WELLS) | | G 01 N <br> B 01 L |

The present search report has been drawn up for all claims

| Place of search | Date of completion of the search | Examiner |
|---|---|---|
| THE HAGUE | 17-09-1990 | HOCQUET A.P.E. |